# EUROPÄISCHE PATENTSCHRIFT

(11) **EP 1 359 806 B1**
(45) Veröffentlichungstag und Bekanntmachung des Hinweises auf die Patenterteilung: **18.01.2012**
(21) Anmeldenummer: 01909718.7
(22) Anmeldetag: 01.02.2001
(51) Int. Cl.: A22C 13/00, B32B 27/34, B32B 27/08

(54) **FÜNFSCHICHTIGE, BIAXIAL VERSTRECKTE SCHLAUCHFOLIE ZUR VERPACKUNG UND UMHÜLLUNG VON FLEISCH ODER FLEISCH MIT KNOCHEN UND IHRE VERWENDUNG**
FIVE-LAYERED, BIAXIALLY-ORIENTED TUBULAR FILM FOR PACKAGING AND WRAPPING OF MEAT OR MEAT WITH BONES AND USE THEREOF
FILM TUBULAIRE A CINQ COUCHES, ETIRE BIAXIALEMENT, UTILISE POUR EMBALLER ET ENVELOPPER DE LA VIANDE OU DE LA VIANDE AVEC OS ET SON UTILISATION

(43) Veröffentlichungstag der Anmeldung: 12.11.2003
(73) Patentinhaber: Naturin Viscofan GmbH, 69469 Weinheim (DE)
(72) Erfinder: GRUND, Hartmut, 67166 Otterstadt (DE); LANG, Horst, 69469 Weinheim (DE); SCHAUER, Helmut, 68542 Heddesheim (DE)
(74) Vertreter: Tönhardt, Marion
(86) Internationale Anmeldenummer: PCT/EP2001/001067
(87) Internationale Veröffentlichungsnummer: WO 2002/060266

(56) Entgegenhaltungen:
- EP-A- 0 467 039
- EP-A- 0 797 918
- EP-A- 0 879 560
- DE-A- 4 339 337
- DE-A- 19 529 603

## Beschreibung

Die Erfindung betrifft eine fünfschichtige, biaxial verstreckte, schrumpffähige, siegelfähige Schlauchfolie und ihre Verwendung zur Verpackung und Umhüllung von Fleisch oder Fleisch mit Knochen.

Aus der DE 43 39 337 C2 ist bereits eine fünfschichtige Schlauchfolie zur Verpackung und Umhüllung von pastösen Lebensmitteln, insbesondere Wursthülle, auf Basis von Polyamid bekannt. Diese Schlauchfolie besteht aus einer inneren und einer äußeren Schicht aus dem gleichen Polyamidmaterial, einer mittleren Polyolefinschicht sowie aus zwei aus dem gleichen Material bestehenden Haftvermittlerschichten zwischen jeweils innerer Schicht und Mittelschicht und Mittelschicht und äußerer Schicht. Innen- und Außenschicht bestehen aus wenigstens einem aliphatischen Polyamid und/oder wenigstens einem aliphatischen Copolyamid sowie wenigstens einem teilaromatischen Polyamid und/oder wenigstens einem teilaromatischen Copolyamid, wobei der Anteil des teilaromatischen Polyamids und/oder Copolyamids 5 bis 60 Gew.-%, bezogen auf das Gesamtgewicht der Polymermischung aus teilaromatischen und aliphatischen Polyamiden und Copolyamiden beträgt. Einer solchen Schlauchfolie, die durch Coextrusion hergestellt wird, wird durch biaxiales Verstrecken und Thermofixieren ein kontrolliertes Schrumpfvermögen verliehen. Eine solche Schlauchfolie ist hinsichtlich anwendungstechnischer Eigenschaften, die für die Umhüllung bzw. Verpackung von Fleisch, insbesondere Fleisch mit Knochen, wichtig sind, verbesserungsbedürftig. Bei Fleisch mit Knochen besteht die Gefahr, daß hervorstehende Knochen die verpackte Folie nach dem Aufschrumpfen der Verpackungsfolie auf das Verpackungsgut durchstoßen, weil die Durchstoßfestigkeit zu gering ist. Ferner sollten derartige Schlauchfolien zur Verpackung und Umhüllung von Fleisch oder Fleisch mit Knochen auch auf einfache Weise durch Heißsiegeln verschlossen werden können. Bei aus derartigen Schlauchfolien hergestellten Beuteln kommt es entscheidend auf die Festigkeit der Siegelnaht an. Sowohl beim Einbringen der Fleischstücke als auch beim späteren Vakuumieren und Schrumpfen der Beutel wird die Heißsiegelnaht extremen Belastungen ausgesetzt. Auch der Transport und die Lagerung der gefüllten Beutel stellt hohe Anforderungen an die Durchstoßfestigkeit der Folie und die Siegelnahtfestigkeit.

EP 0 467 039 A beschreibt eine mehrschichtige, schlauchförmige Verpackungshülle für pastöses Füllgut, insbesondere künstliche Wursthülle, auf Basis von Polyamid, welche nach dem Füllen an dem umhüllten Füllgut (insbesondere Wurstmasse) haften bleibt, die so hergestellte Hülle ferner gegenüber Wasserdampf und Luftsauerstoff nur geringe Durchlässigkeit aufweist, damit das Verpackungsgut selbst nach längerer Lagerzeit keinen Gewichtsverlust zeigt, und ferner sich auch kein Gelee zwischen Wurstmasse und Hüllenwand absetzen soll. Diese Verpackungshülle ist aufgebaut aus einer äußeren Schicht auf Basis von aliphatischem Polyamid, aliphatischem Copolyamid oder einer Polymermischung aus wenigstens einer dieser Verbindungen, einer wasserdampfdichten mittleren Schicht aus Polyolefin und haftungsvermittelnder Komponente und einer vorzugsweise gegenüber Sauerstoff dichten inneren Schicht auf Basis von aliphatischen und/oder teilaromatischen Polyamiden und/oder aliphatischen und/oder teilaromatischen Copolyamiden. Eine solche Hülle ist hinsichtlich eines Verpackungsgutes wie insbesondere Fleisch mit Knochen bezüglich Durchstoßfestigkeit der Schlauchfolie und hohe Festigkeit der Siegelnaht, wenn aus der Folie Beutel hergestellt werden, verbesserungsbedürftig.

Aufgabe der vorliegenden Erfindung ist es daher, eine biaxial verstreckte, schrumpffähige, siegelfähige Schlauchfolie zur Verpackung und Umhüllung von Fleisch oder Fleisch mit Knochen bereitzustellen, die neben den an eine solche Verpackungsfolie zu stellenden Anforderungen wie geringe Wasserdampf- und Sauerstoffdurchlässigkeit eine hohe Durchstoßfestigkeit der Schlauchfolie einerseits und eine hohe Festigkeit der Siegelnaht andererseits aufweist.

Diese Aufgabe wird erfindungsgemäß durch eine fünfschichtige, biaxial verstreckte, schrumpffähige, siegelfähige Schlauchfolie mit den kennzeichnenden Merkmalen des Anspruchs 1 gelöst.

Die Innenschicht der erfindungsgemäßen Schlauchfolie besteht aus einem heißsiegelfähigen Copolyamid, nämlich aus Copolyamid 6/12 und/oder Copolyamid 6/66. Geeignete Copolyamide sind bekannt und können aus entsprechenden Monomeren, wie z.B. Caprolactam, Laurinlactam, Adipinsäure, und Hexamethylendiamin hergestellt werden. Die Wandstärke der Innenschicht liegt zwischen 5 und 16 µm.

Als Mittelschicht dient in der erfindungssemäßen Hülle eine Polyolefinschicht, die bevorzugt aus Homopolymeren von Ethylen oder Propylen und/oder Copolymeren von linearen Alphaolefinen mit 2 bis 8 C-Atomen aufgebaut ist. Vorzugsweise wird für die Mittelschicht lineares Polyethylen niedriger Dichte, Polyethylen hoher Dichte, Polypropylen-Homopolymerisat, Polypropylen-Block- und Polypropylen-Random-Copolymerisat verwendet. Die Wandstärke der Mittelschicht liegt zwischen 6 und 22 µm

Die beiden Haftvermittlerschichten zwischen innerer Schicht und Mittelschicht einerseits und Mittelschicht und äußerer Schicht andererseits bestehen aus mit funktionellen Gruppen modifizierten Polyolefinen. Bei derartigen modifizierten Polyolefinen handelt es sich um modifizierte Homo- oder Copolymere des Ethylens und/oder Propylens und gegebenenfalls weiterer linearer Alphaolefine mit 3 bis 8 C-Atomen, die Monomere aus der Gruppe der Alpha-Beta-ungesättigten Dicarbonsäuren, wie Maleinsäure, Fumarsäure, Itaconsäure oder deren Säureanhydride, Säureester, Säureamide oder Säureimide aufgepfropft enthalten. Die Wandstärke der jeweiligen Haftvermittlerschicht liegt zwischen 3 und 10 µm.

Die Außenschicht besteht aus einem Homopolyamid, bevorzugt einem aliphatischen Homopolyamid. Aliphatische Homopolyamide sind Homopolykondensate aus aliphatischen primären Diaminen und aliphatischen Dicarbonsäuren oder Homopolymerisate von Omegaaminocarbonsäuren oder deren Lactamen. Beispiele für aliphatische Diamine sind Tetra-, Penta-, Hexa- oder Octamethylendiamin. Geeignete aliphatische Dicarbonsäuren sind Adipinsäure, Azelainsäure, Sebazinsäure, Decandicarbonsaure und Dodecandicarbonsäure. Die Omegaaminocarbonsäuren bzw. deren Lactame enthalten 6 bis 12 C-Atome. Beispiele hierfür sind 1 1-Aminoundecansäure, Epsilon-Caprolactam und Omega-Laurinlactam. Die Wandstärke der Außenschicht liegt zwischen 12 und 43 µm.

Die erfindungsgemäßen Schlauchfolien werden durch Coextrusion hergestellt, wobei die einzelnen Polymeren für die unterschiedlichen Schichten in fünf Extrudern plastifiziert und homogenisiert und sodann die fünf Schmelzströme entsprechend den gewünschten Einzelwandstärkenverhältnissen durch einen Fünfschichtextrusionskopf zu einem Primärrohr ausgeformt, biaxial verstreckt und thermofixiert werden.

Die Schlauchfolien können zusätzlich bekannte Hilfsstoffe wie z.B. Antiblockmittel. Stabilisatoren, Antistatika oder Gleitmittel enthalten. Diese Hilfsstoffe werden gewöhnlich in Mengen von 0,1 bis 5 Gew.% zugesetzt. Weiterhin kann die Folie durch Zugabe von Pigmenten oder Pigmentmischungen eingefärbt werden.

Die erfindungsgemäßen Schlauchfolien weisen Gesamtwandstärken im Bereich von 30 bis 100, vorzugsweise 50 bis 90 µm auf

Die erfindungsgemäßen Schlauchfolien sind überraschenderweise den Schlauchfolien der DE 43 39 337 C2 sowohl hinsichtlich der Siegelnahtfestigkeit als auch der Durchstoßfestigkeit deutlich überlegen.

Für die Bestimmung der Siegelnahtfestigkeit wurden die jeweiligen Schlauchfolien quer zur Laufrichtung innenseitig mit einem Laborschweißgerät SGPE 20 der Fa. W. Kopp Verpakkungsmaschinen verschweißt. Aus den verschweißten Schlauchfolien wurden 25 mm breite Streifenproben derart entnommen, daß die Schweißnaht quer zur Längsrichtung des Streifens lag. Die Streifenproben wurden auf einer Zugprüfmaschine der Fa. Instron mit einer Abzugsgeschwindigkeit von 500 mm/min bis zum Bruch der Schweißnaht auseinandergezogen. Die dabei erreichte Maximalkraft wird im Folgenden als Siegelnahtfestigkeit bezeichnet.

Als Maß für die Durchstoßfestigkeit wird die Schädigungsarbeit im Durchstoßversuch ermittelt.

Die Bestimmung der Schädigungsarbeit erfolgte in Anlehnung an die DIN 53373, wobei jedoch abweichend zu dieser DIN-Norm als Stoßkörper ein gehärteter Zylinderstift Form A mit 3 mm Durchmesser entsprechend DIN EN 28 734 eingesetzt wurde und die Prüfgeschwindigkeit 500 mm/min betrug. Die Schädigungsarbeit ist die bis zum ersten Anriß der Probe verbrauchte Energie.

Die, Schlauchfolie nach DE 43 39 337 C2 konnte bei Siegeltemperaturen von 140 und 180 °C nicht verschweißt werden, während die erfindungsgemäße Schlauchfolie bereits bei einer Siegeltemperatur von 140 °C eine befriedigende Siegelnahtfestigkeit von 36 N/25 mm aufweist und bei einer Siegeltemperatur von 180 °C sogar eine sehr gute Siegelnahtfestigkeit von 78 N/25mm erreicht wird. Die Schlauchfolie nach DE 43 39 337 C2 zeigt auch bei einer Siegeltemperatur von 220 °C nur eine äußerst unbefriedigende Siegelnahtfestigkeit, während die erfindungsgemäße Schlauchfolie bei dieser Siegeltemperatur nochmals eine Steigerung der Siegelnahtfestigkeit aufweist.

Die Schädigungsarbeit im Durchstoßversuch beträgt bei der erfindungsgemäßen Schlauchfolie 530 mJ, während die Schlauchfolie nach DE 43 39 337 C2 nur eine Schädigungsarbeit von 410 mJ erreicht.

Die Erfindung wird durch nachfolgendes Beispiel näher erläutert:

### Beispiel

Die einzelnen Polymeren für die unterschiedlichen Schichten wurden in fünf Extrudern plastifiziert und homogenisiert. Die fünf Schmelzeströme wurden entsprechend den gewünschten Einzelwandstärkenverhältnissen einem Fünfschichtextrusionskopf zugeführt und zu einem Primärrohr ausgeformt, biaxial versteckt und thermofixiert. Das Primärrohr hatte einen Durchmesser von 62 mm und eine mittlere Gesamtwandstärke von 0,68 mm. Es wurde mit Infrarotstrahlung auf 110 °C aufgeheizt und mit einem Flächenreckverhältnis von 9,7 verstreckt. Der biaxial versteckte Schlauch wurde thermofixiert, flachgelegt und aufgewickelt. Die mittlere Gesamtwandstärke des Schlauches betrug 70 µm. Die Liegebreite betrug 328 mm.

Der Schichten des fertigen Schlauches bestanden aus den folgenden Polymeren mit den angegebenen Einzelwandstärken:

| | |
|---|---|
| 1. Schicht (Außenschicht): | Polyamid 6, Durethan B40 F der Bayer AG, 32 µm |
| | |
| 2. Schicht: | Haftvermittler, modifiziertes Polyethylen, Bynel 4140 der Fa. Du Pont de Nemours GmbH, 6 µm |
| | |
| 3. Schicht: | Polyethylen (LLDPE), Flexirene CL 10 der Fa. Polymeri Europa SRL, 15 µm |
| | |
| 4. Schicht: | Haftvermittler (wie 2. Schicht), 6 µm |
| | |
| 5. Schicht (Innenschicht): | Polyamid 6/12, Grilon CF6S der Fa. EMS Chemie, 11 µm |

Folgende Werte für die Siegelnahtfestigkeit wurden ermittelt:

| | |
|---|---|
| Siegeltemperatur 140°C: | 36 N/25 mm |
| Siegeltemperatur 180°C: | 78 N/25 mm |
| Siegeltemperatur 220°C: | 83 N/25 mm |

Die Schädigungsarbeit betrug 530 mJ.

### Vergleichsbeispiel

Entsprechend DE 43 39 337C2 wurde eine fünfschichtige Schlauchfolie mit folgendem Aufbau hergestellt:

| | |
|---|---|
| 1. Schicht (Außenschicht): | Mischung aus 95 % Polyamid 6, Durethan B40 F der Bayer AG und 5 % Polyamid 6I/6T, Grivory G21 der Fa. EMS-Chemie, 25 µm |
| | |
| 2. Schicht: | Haftvermittler, modifiziertes Polyethylen, Admer NF 478E der Fa. Mitsui Chemicals Inc., 8 µm |
| | |
| 3. Schicht: | Polyethylen (LLDPE), Dowlex 2049 E der Fa. DOW Chemical Company, 21 µm |
| | |
| 4. Schicht: | Haftvermittler (wie 2. Schicht), 8 µm |
| | |
| 5. Schicht (Innenschicht): | Mischung aus 95 % Polyamid 6, Durethan B40 F der Bayer AG und 5 % Polyamid 6I/6T, Grivory G21 der Fa. EMS-Chemie, 8 µm |

Folgende Werte für die Siegelnahtfestigkeit wurden ermittelt:

| | |
|---|---|
| Siegeltemperatur 140°C: | nicht verschweißt |
| Siegeltemperatur 180°C: | nicht verschweißt |
| Siegeltemperatur 220°C: | 2 N/25 mm |

Die Schädigungsarbeit betrug 410 mJ.

## Patentansprüche

1. Fünfschichtige, biaxial verstreckte, schrumpffähige, siegelfähige Schlauchfolie zur Verpackung und Umhüllung von Fleisch oder Fleisch mit Knochen, **dadurch gekennzeichnet, dass** sie aus einer inneren Schicht aus einem heiβsiegelfähigen Polyamid 6/12 und/oder einem heiβsiegelfähigen Polyamid 6/66, einer mittleren Polyolefinschicht und einer äußeren Schicht aus einem
Homopolyamid sowie aus zwei Haftvermittlerschichten zwischen innerer und Mittelschicht und zwischen Mittel- und äußerer Schicht besteht, wobei die beiden Haftvermittlerschichten aus mit funktionellen Gruppen modifizierten Polyolefinen bestehen.

2. Schlauchfolie nach Anspruch 1, **dadurch gekennzeichnet, dass** die innere Schicht aus wenigstens einem heiβsiegelfähigen Copolyamid besteht, welches aus Monomeren hergestellt worden ist, die aus der Gruppe Caprolactam, Laurinlactam, Adipinsäure und Hexamethylendiamin ausgewählt sind.

3. Schlauchfolie nach Anspruch 1 oder 2, **dadurch gekennzeichnet, dass** die Polyolefin-Mittelschicht aus Homopolymeren von Ethylen oder Propylen und/oder Copolymeren von linearen Alphaolefinen mit 2 bis 8 C-Atomen aufgebaut ist.

4. Schlauchfolie nach Anspruch 3, **dadurch gekennzeichnet, dass** die Polyolefine der Mittelschicht vorzugsweise aus linearem Polyethylen niedriger Dichte, Polyethylen hoher Dichte, Polypropylen-Homopolymerisaten, Polypropylen-Block- und Polypropylen-Random-Copolymerisaten bestehen.

5. Schlauchfolie nach Anspruch 1, **dadurch gekennzeichnet, dass** die modifizierten Polyolefine modifizierte Homo- oder Copolymere des Ethylens und/oder Propylens und gegebenenfalls weiterer linearer Alphaolefine mit 3 bis 8 C-Atomen, die Monomere aus der Gruppe der Alpha-Beta-ungesättigten Dicarbonsäuren, bevorzugt Maleinsäure, Fumarsäure, Itaconsäure oder deren Säureanhydride, Säureester, Säureamide oder Säureimide aufgepfropft enthalten, sind.

6. Schlauchfolie nach Anspruch 1, **dadurch gekennzeichnet, dass** die modifizierten Polyolefine der beiden Haftvermittlerschichten Copolymerisate von Ethylen oder Propylen und gegebenenfalls weiteren linearen Alphaolefinen mit 3 bis 8 C-Atomen mit Alpha-Beta-ungesättigten Carbonsäuren, bevorzugt Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, sind.

7. Schlauchfolie nach einem der Ansprüche 1 bis 6, **dadurch gekennzeichnet, dass** sie aus einer coextrudierten und biaxial verstreckten Schlauchfolie besteht, welche thermofixiert ist.

8. Schlauchfolie nach einem der Ansprüche 1 bis 7, **dadurch gekennzeichnet, dass** die Außenschicht aus einem aliphatischen Homopolyamid, aufgebaut ist.

9. Schlauchfolie nach Anspruch 8, **dadurch gekennzeichnet, dass** das aliphatische Homopolyamid aus aliphatischen primären Diaminen und aliphatischen Dicarbonsäuren oder Omegaaminocarbonsäuren oder deren Lactamen gebildet wird.

10. Schlauchfolie nach Anspruch 9, **dadurch gekennzeichnet, dass** das aliphatische Homopolyamid Polyamid 6 ist.

11. Schlauchfolie nach einem der Ansprüche 1 bis 10, **dadurch gekennzeichnet, dass** ihre Wandstärke 30 bis 100, vorzugsweise 50 bis 90, µm beträgt.

12. Verwendung der Schlauchfolie nach einem der Ansprüche 1 bis 11 zur Verpackung von Fleisch oder Fleisch mit Knochen.

13. Beutel, **dadurch gekennzeichnet, dass** er aus einer Schlauchfolie nach einem der Ansprüche 1 bis 11 durch Verschweißen oder Siegeln der Innenschicht mit sich selbst hergestellt ist.

14. Verwendung eines nach Anspruch 13 hergestellten Beutels zur Verpackung von Fleisch oder Fleisch mit Knochen.

## Claims

1. A five-layered, biaxially oriented, shrinkable, sealable tubular film for the packaging and wrapping of meat or meat with bones, **characterized in that** the tubular film is constituted of an inner layer comprised of a heat-sealable polyamide 6/12 and/or a heat-sealable polyamide 6/66, a polyolefin middle layer, and an outer layer comprised of a homopolyamide, and two adhesion-promoting layers situated between the inner layer and middle layer and between the middle layer and outer layer, wherein both adhesion-promoting layers are comprised of polyolefins modified with functional groups.

2. The tubular film according to claim 1, **characterized in that** the inner layer is comprised of at least one heat-sealable copolyamide produced from monomers selected from the group of caprolactam, laurinlactam, adipic acid and hexamethylenediamine.

3. Tubular film according to claim 1 or 2, **characterized in that** the polyolefin middle layer is constituted of homopolymers of ethylene or propylene and/or of copolymers of linear alpha-olefins having from 2 to 8 C atoms.

4. Tubular film according to claim 3, **characterized in that** the polyolefins of the middle layer are preferably comprised of linear low-density polyethylene, high-density polyethylene, polypropylene-homopolymers, polypropylene block co-polymers and polypropylene random co-polymers.

5. Tubular film according to claim 1, **characterized in that** the modified polyolefins are modified homo- or co-polymers of ethylene and/or propylene and optionally other linear α-olefins having from 3 to 8 C atoms, which have monomers from the group of α, β-unsaturated dicarboxylic acids, preferably maleic acid, fumaric acid, itaconic acid, of anhydrides, esters, amides or imides thereof grafted thereon.

6. The tubular film according to claim 1, **characterized in that** the modified polyolefins of the two adhesion-promoting layers are copolymers of ethylene or propylene and optionally other linear α-olefins having from 3 to 8 C atoms and α, β-unsaturated carboxylic acid, preferably acrylic acid, metacrylic acid and/or metal salts and/or alkyl esters thereof, or appropriate graft copolymers of the above-mentioned monomers on polyolefins, or partially saponified ethylene-vinyl acetate copolymers which are optionally graft-polymerised with an α, β-unsaturated carboxylic acid and have a low saponification level, or mixtures thereof.

7. The tubular film according to one of claims 1 to 6, **characterized in that** the tubular film consists of a coextruded and biaxially stretched tubular film which has been subjected to heat-setting.

8. The tubular film according to one of claims 1 to 7, **characterized in that** the outer layer is constituted of a homopolyamide.

9. The tubular film according to claim 8, **characterized in that** the aliphatic homopolyamide is formed from aliphatic primary diamins and aliphatic dicarboxylic acids or omega-aminocarboxylic acids or lactams thereof.

10. The tubular film according to claim 9, **characterized in that** the aliphatic homopolyamide is polyamide 6.

11. The tubular film according to one of claims 1 to 10, **characterized in that** the wall thickness thereof is from 30 to 100, preferably from 50 to 90 µm.

12. Use of the tubular film according to one of claims 1 to 11 for packaging meat or meat with bones.

13. A bag, **characterized in that** the bag is produced from a tubular film according to one of claims 1 to 14 by welding or sealing of the inner layer on itself.

14. Use of a bag produced according to claim 13 for packing meat or meat with bones.

## Revendications

1. Film tubulaire à cinq couches, à orientation biaxiale, rétractable, pour l'emballage et l'enveloppement de viande ou de viande avec os, **caractérisé en ce qu'**il est constitué d'une couche intérieure en un polyamide 6/12 thermoscellable, et/ou en un polyamide 6/66 thermoscellable, d'une couche centrale de polyoléfine et d'une couche extérieure constituée d'un homopolyamide, ainsi que de deux couches d'un promoteur d'adhérence entre la couche intérieure et la couche centrale et entre la couche centrale et la couche extérieure, et deux couches du promoteur d'adhérence étant constituées de polyoléfines modifiées par des groupes fonctionnels.

2. Film tubulaire selon la revendication 1, **caractérisé en ce que** la couche intérieure est constituée d'au moins un copolyamide thermoscellable, qui a été fabriqué à partir de monomères choisis dans le groupe consistant en le caprolactame, le laurinelactame, l'acide adipique et l'hexaméthylènediamine.

3. Film tubulaire selon la revendication 1 ou 2, **caractérisé en ce que** la couche centrale de polyoléfine est constituée à partir d'homopolymères de l'éthylène ou du propylène et/ou de copolymères d'alpha-oléfines linéaires ayant 2 à 8 atomes de carbone.

4. Film tubulaire selon la revendication 3, **caractérisé en ce que** les polyoléfines de la couche centrale sont de préférence constituées d'un polyéthylène basse densité linéaire, d'un polyéthylène haute densité, d'homopolymères du polypropylène, de copolymères à blocs de polypropylène et de copolymères statistiques de polypropylène.

5. Film tubulaire selon la revendication 1, **caractérisé en ce que** les polyoléfines modifiées sont des homopolymères ou des copolymères modifiés de l'éthylène et/ou du propylène et éventuellement d'autres alpha-oléfines linéaires ayant 3 à 8 atomes de carbone, qui contiennent, greffés, les monomères du groupe consistant en les acides dicarboxyliques alpha,bêta-insaturés, de préférence l'acide maléique, l'acide fumarique, l'acide itaconique ou leurs anhydrides, les esters d'acides, les amides d'acides ou les imides d'acides.

6. Film tubulaire selon la revendication 1, **caractérisé en ce que** les polyoléfines modifiées des deux couches d'un promoteur d'adhérence sont des copolymères de l'éthylène ou du propylène et éventuellement d'autres alpha-oléfines linéaires ayant 3 à 8 atomes de carbone, et d'acides carboxyliques alpha,bêta-insaturés, de préférence l'acide acrylique, l'acide méthacrylique et/ou leurs sels et/ou leurs esters alkyliques, ou des copolymères greffés correspondants des monomères mentionnés sur des polyoléfines, ou des copolymères éthylène/acétate de vinyle partiellement saponifiés, qui éventuellement sont polymérisés par greffage avec un acide carboxylique alpha,bêta-insaturés et présentent un faible degré de saponification, ou leurs mélanges.

7. Film tubulaire selon l'une des revendications 1 à 6, **caractérisé en ce qu'**il est constitué d'un film tubulaire coextrudé et à orientation biaxiale, qui est thermofixé.

8. Film tubulaire selon l'une des revendications 1 à 7, **caractérisé en ce que** la couche extérieure est constituée d'un homopolyamide aliphatique.

9. Film tubulaire selon la revendication 8, **caractérisé en ce que** l'homopolyamide aliphatique est formé à partir de diamines primaires aliphatiques et d'acides dicarboxyliques aliphatiques ou d'acides oméga-aminocarboxyliques, ou de leurs lactames.

10. Film tubulaire selon la revendication 9, **caractérisé en ce que** l'homopolyamide aliphatique est le polyamide 6.

11. Film tubulaire selon l'une des revendications 1 à 10, **caractérisé en ce que** son épaisseur de paroi est de 30 à 100, de préférence de 50 à 90 µm.

12. Utilisation du film tubulaire selon l'une des revendications 1 à 11 pour l'emballage de viande ou de viande avec os.

13. Sachet, **caractérisé en ce qu'**il est fabriqué à partir d'un film tubulaire selon l'une des revendications 1 à 11 par soudage ou thermoscellage de la couche intérieure avec elle-même.

14. Utilisation d'un sachet fabriqué selon la revendication 13 pour l'emballage de viande ou de viande avec os.
